# EUROPÄISCHE PATENTSCHRIFT

(11) **EP 1 314 084 B1**
(45) Veröffentlichungstag und Bekanntmachung des Hinweises auf die Patenterteilung: **08.12.2010**
(21) Anmeldenummer: 01976164.2
(22) Anmeldetag: 29.08.2001
(51) Int. Cl.: G06F 3/12

(54) **VERFAHREN, VORRICHTUNG UND COMPUTERPROGRAMMPRODUKT ZUM ARCHIVIEREN EINES DRUCKDATENSTROMS**
METHOD, APPARATUS AND COMPUTER PROGRAM PRODUKT FOR ARCHIVING A DATA FLOW
PROCEDE, APPAREIL ET PRODUIT DE PROGRAMME INFORMATIQUE POUR L'ARCHIVAGE D'UN FLUX DE DONNEES D'IMPRESSION

(30) Priorität: 31.08.2000 DE 10042795
(43) Veröffentlichungstag der Anmeldung: 28.05.2003
(73) Patentinhaber: OCÉ Printing Systems GmbH, 85586 Poing (DE)
(72) Erfinder: LIBION, Fabian, B-5020 Namur (BE); PARDONGE, Pierre-Etienne, B-5020 Namur (BE)
(74) Vertreter: Schaumburg, Thoenes, Thurn, Landskron, Eckert
(86) Internationale Anmeldenummer: PCT/EP2001/009953
(87) Internationale Veröffentlichungsnummer: WO 2002/019086

(56) Entgegenhaltungen:
- WO-A-99/12337
- US-A- 5 940 584

## Beschreibung

Die Erfindung betrifft ein Verfahren, eine Vorrichtung und ein Computerprogrammprodukt zum Archivieren eines Druckdatenstroms. Sie ist insbesondere zur kommerziellen Anwendung in Rechenzentren geeignet, in denen unter Hochgeschwindigkeits-Produktionsbedingungen umfangreiche Datenströme in kurzer Zeit archiviert werden müssen.

In Großrechenzentren werden Daten typischerweise in einem Host Computer (Main Frame) verarbeitet, Druckdaten in einem Spooling-Vorgang zusammengetragen und daraus Druckaufträge (Jobs) generiert, die derart zur Ausgabe auf Hochleistungsdrucksystemen angepaßt sind, dass die Hochleistungsdrucksysteme im Produktionsbetrieb zeitlich optimal ausgelastet werden können. Sie können dabei weitgehend im kontinuierlichen Betrieb eingesetzt werden.

Derartige Hochleistungsdrucker mit Druckgeschwindigkeiten von etwa 40 DIN A 4 Seiten pro Minute bis zu über 1000 DIN A 4 Seiten pro Minute sind beispielsweise in der Veröffentlichung "Das Druckerbuch", herausgegeben von Dr. Gerd Goldmann (Océ Printing Systems GmbH), Ausgabe 4C, Oktober 1999, ISBN 3-000-00 1019-X beschrieben. Im Kapitel 12 (Seiten 12-1 bis 12-18) dieser Publikation ist das unter dem Namen PRISMA PRO^{®} bekannte Server-System beschrieben, welches in Produktions-Druck-Umgebungen der Aufbereitung von Druckdatenströmen dient.

Ein typisches Druckdatenformat in elektronischen Produktions-Druck-Umgebungen ist das Format "Advanced Function Presentation", abgekürzt AFP, welches beispielsweise in der Publikation Nr. F-544-3884-01 der Firma International Business Machines Corp. (IBM) mit dem Titel "AFP Programming Guide and Line Data Reference" beschrieben ist. Der Druckdatenstrom AFP wurde weiterentwickelt zu dem Druckdatenstrom MO:DCA, welcher in der IBM-Publikation SC31-6802-04 mit dem Titel "Mixed Object Document Content Architecture Reference" beschrieben ist. Weitere Details dieses Datenformats, insbesondere die Verwendung von strukturierten Feldern (structured fields), sind auch in der US-A-5,768,488 beschrieben.

Mit den Datenformaten AFP bzw. MO:DCA ist es möglich, Dokumente zwischen verschiedenen Plattformen und/oder Anwendungen wie Spoolern, Viewern, Archivierungssystemen etc. auszutauschen. In der US-A-5,727,220 und in der US-A-5,717,922 sind entsprechende Verfahren und Systeme beschrieben, in denen zusammengehörige Objekte eines Dokuments über einen strukturierten Datenstrom wie MO:DCA oder IPDS (Intelligent Print Data Stream) verarbeitet werden.

Von der Firma IBM ist des weiteren ein unter der Bezeichnung ACIF bekannt gewordene Programm geschaffen worden, mit dem es möglich ist, Druckdatenströme zu konvertieren und zu indizieren. Die ACIF-Anwendung ist in der IBM-Broschüre G544-3824-00 mit dem Titel "Conversion and indexing facility application programming guide" sowie in der IBM-Broschüre Nr. S544-5285-00 mit der Bezeichnung "AFP conversion and indexing facility (ACIF) user's guide" beschrieben.

In der US-A-5,613,110 ist ein Verfahren zum Indizieren von Daten beschrieben. Ein weiteres Verfahren zum Indizieren von Daten ist in der von der Anmelderin eingereichten deutschen Patentanmeldung Nr. 100 17 785.9 mit dem internen Aktenzeichen 2000-0303 DE beschrieben. Die Daten werden dabei zunächst in ein normiertes Datenformat umgesetzt, dann indiziert und können schließlich nach vorgegebenen Sortierparametern sortiert werden, bevor sie zur weiteren Verarbeitung, z.B. zum Drucken und/oder Archivieren ausgegeben werden. Das dort beschriebene System bzw. Verfahren (converting, indexing, sorting, abgekürzt CIS) eignet sich insbesondere zur Anwendung in Datenströmen wie AFP, die einer normierten Einteilung in variable Daten und statische Ressourcendaten folgen.

In der WO 99/12337 A2 ist ein Verfahren und ein Gerät zum elektronischen Archivieren eines Computer-Datenstroms beschrieben, bei dem zu archivierende Daten bildpunktweise abgespeichert werden und in einem elektronischen Langzeitspeicher, beispielsweise auf einer optischen Speicherplatte oder einer CD-ROM indiziert abgespeichert werden. Die gespeicherten Daten können dann zu einem beliebigen späteren Zeitpunkt anhand der Indexdaten elektronisch aufgefunden werden. Danach können sie durch elektronische Anzeige oder durch Ausdrucken exakt reproduziert werden. Aus der WO 99/12337 A2 ist es weiterhin bekannt, Dokumentendaten, die einerseits einem Druckvorgang zugefügt werden und andererseits in ein Archiv überspielt werden, für die Archivierung so aufzubereiten, daß Datenteile, die in einem Dokument mehrfach vorkommen, im Archiv nur einmal abgespeichert werden und somit Speicherplatz eingespart werden kann.

In der US 5,404,435 ist ein Archivierungssystem für Objekte beschrieben, die keine Texte enthalten.

Aus der US-A-5,940,584 ist ein Verfahren und ein Gerät zur elektronischen Archivierung der von einem Rechner - zur Übergabe an einen Drucker - aufbereiteten Dokumente bekannt. Die vom Rechner als Druckdatenstrom gelieferten Dokumente enthalten Textinformationen und Barcodes, welche als Indexdaten automatisch herausgefiltert und neutralisiert in einen Index-Datenstrom umgesetzt werden, so daß sie zu den zum Drucker angepaßt aufgerasterten Pixel-Datenstrom parallel sind.Beide Datenströme werden kann logisch synchronisiert und zu einem Datensatz als logische Einheit zusammengefaßt sowie in bekannter Weise an einen Datenträger zum Archivieren weitergeleitet.

Es ist Aufgabe der Erfindung, das hochperformante Archivieren von Datenströmen zu ermöglichen.

Diese Aufgabe wird durch die in den unabhängigen Patentansprüchen beschriebene Erfindung gelöst. Vorteilhafte Ausführungsformen sind Gegenstand der Unteransprüche.

Gemäß einem ersten Aspekt der Erfindung werden aus einer Vielzahl möglicher Indizierungsparameter, nach denen sich Druckdatenströme einteilen lassen, verschiedene Indizierungssets, sog. Dokument Templates gebildet und abgespeichert. Ein Dokument Template enthält dabei jeweils eine Gruppe von Indizierungsparametern, mit denen jeweils der Inhalt eines Dokuments inhaltlich erschließbar ist.

Gemäß dem ersten Aspekt der Erfindung ist weiterhin vorgesehen, dass ein zu aktivierender Druckdatenstrom einer Indizierungseinheit zugeführt wird, wobei dem Druckdatenstrom ein Indizierungsset zugeordnet wird und anhand des Indizierungssets aus dem Druckdatenstrom Indexdaten gebildet werden. In einem weiteren Schritt werden aus dem Druckdatenstrom individuelle Dokumentendaten gebildet und jeweils zusammengehörige Indexdaten und Dokumentendaten mittels Kennummern logisch verbunden und dann die Indexdaten, die Dokumentendaten und die Kennummern in einem Archivspeicher abgelegt.

Mit der Erfindung wird damit ein System geschaffen, durch das Datenströme vollautomatisch indiziert und archiviert werden können. Dies ermöglicht insbesondere, Druckdatenströme, die von einem Host-Computer an Spooling-Systeme übertragen werden, automatisch zu untersuchen, zu indizieren und zu archivieren. Insbesondere AFP-Druckdatenströme können dabei automatisch speicheroptimiert archiviert werden, indem statische Resourcen-Daten, die in mehreren Dokumenten identisch vorkommen, nur einmalig abgespeichert werden und über entsprechende Verbindungen (Kennummern) den zugehörigen Indexdaten und variablen Daten zugeordnet werden. Als Indizierungseinheit wird insbesondere ein Computerprogramm verwendet, das in der Lage ist, eingehende Daten auf ein einheitliches Datenformat zu konvertieren, diese Daten zu indizieren und die Daten nach vorgegebenen Parametern zu sortieren. Erfindungsgemäß ist insbesondere vorgesehen, ein derartiges Computerprogramm bzw. Modul zweifach zu verwenden, nämlich einerseits zum Aufbereiten eines Druckdatenstroms zur sortierten Zuführung an ein Druckgerät und andererseits zum Indizieren desselben oder eines beliebigen anderen Druckdatenstroms für Archivierungszwecke.

Die erfindungsgemäß archivierten Daten können mit an sich bekannten Verfahren zum Aufsuchen, Laden, Betrachten und/oder Drucken von Daten erfolgen, beispielsweise durch Anwenderprogramme, die einen Zugriff auf die archivierten Daten über ein Netzwerk, z.B. über das Internet, erlauben.

In einem weiteren Aspekt der Erfindung werden Dateien des zu archivierenden Datenstroms in einem Zwischenspeicher abgelegt, der von einem Überwachungsmodul fortwährend auf neu hinzugekommene Dateien überwacht wird. Diese Zwischenspeicherung kann beispielsweise im Rahmen eines Druckdatenspoolings erfolgen, wobei eine Spoolingdatei entweder im Spooler oder in einem mit dem Spooler verbundenen System zwischengespeichert und hinsichtlich einem oder mehreren Indizierungssets, die vorgegebene Indizierungsparameter enthalten, untersucht wird. Dabei kann auch vorgesehen sein, dass das Indizierungsset automatisch dahingehend geprüft wird, ob bestimmte, zur Archivierung benötigten Indizierungsparameter enthalten sind, und je nach Überprüfungsergebnis entweder fehlende Indizierungsdaten automatisch ergänzt oder zur Auswahl angeboten oder zur Eingabe abgefragt werden.

In einem weiteren Aspekt der Erfindung ist vorgesehen, dass zusätzlich zu den Indexparametern eines Indizierungssets im Zuge der Archivierung ergänzende Indexdaten dokumentenspezifisch aufgrund eines im Dokument enthaltenen, insbesondere von einem Anwender erzeugten, Indizierungssets gebildet werden.

Die Indizierungsdaten sind benutzerdefiniert und können neben üblichen Daten wie Namen, Adressen, Postleitzahlen, Rechnungsnummern auch Zugangsberechtigungsdaten enthalten, die Zugriffsberechtigungen auf die jeweiligen Dokumente angeben. Die Zugangsberechtigungsdaten werden vorzugsweise im Archivspeicher abgelegt und im Zuge eines späteren Abrufs der archivierten Daten zur Steuerung der Datenfreigabe verwendet. Derartige Zugriffsberechtigungsdaten, z.B. die Restriktion des Zugriffs auf eine bestimmte Anwendergruppe (Operator, Administrator, Finanzabteilung) können dann bei dem späteren Suchen von Daten den Zugriff regeln.

Nachfolgend werden Ausführungsbeispiele der Erfindung anhand einiger Figuren näher beschrieben:

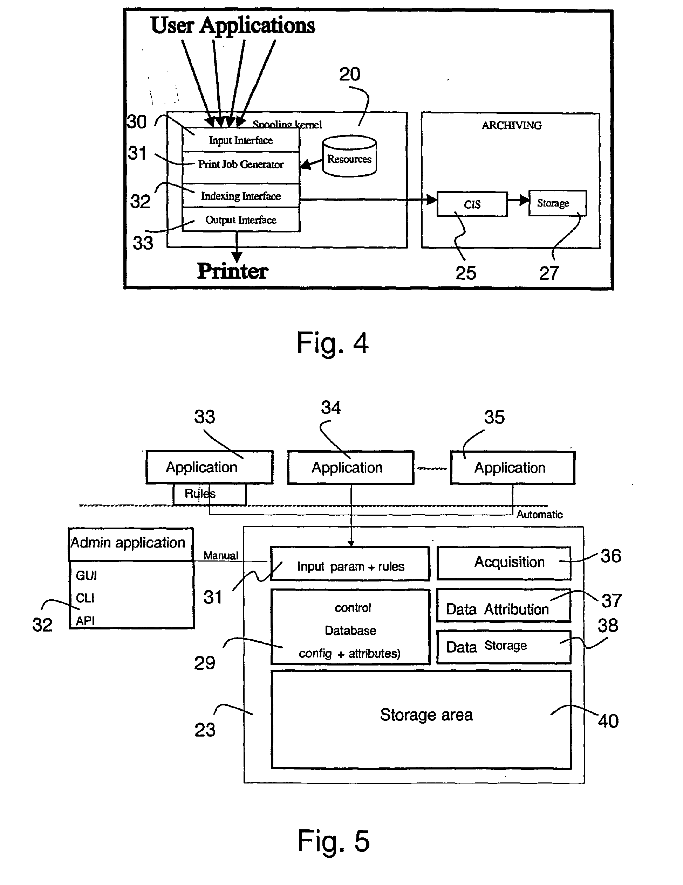

Es zeigen:
Figur 1:
   Komponenten einer Druckproduktionsumgebung
Figur 2:
   Einen typischen Ablauf, bei dem Druckdaten einem Drucker und/oder einem Archiv zugeführt werden
Figur 3:
   Archivierungskomponenten
Figur 4: Details des Spoolers
Figur 5:
   Eine Archivierungskomponente
Figur 6:
   Wesentliche Prozeßschritte der Archivierung
Figur 7:
   Erweiterte Prozeßschritte und Schnittstellen der Archivierung
Figur 8:
   Die logische Verbindung zwischen Daten des Datenstroms und verschiedenen Dokument Templates
Figur 9:
   Eine Konvertierungs-Indizierungs-und Sortiereinheit
Figur 10:
   Daten eines Dokument Templates
Figur 11:
   Eine Suchmaske

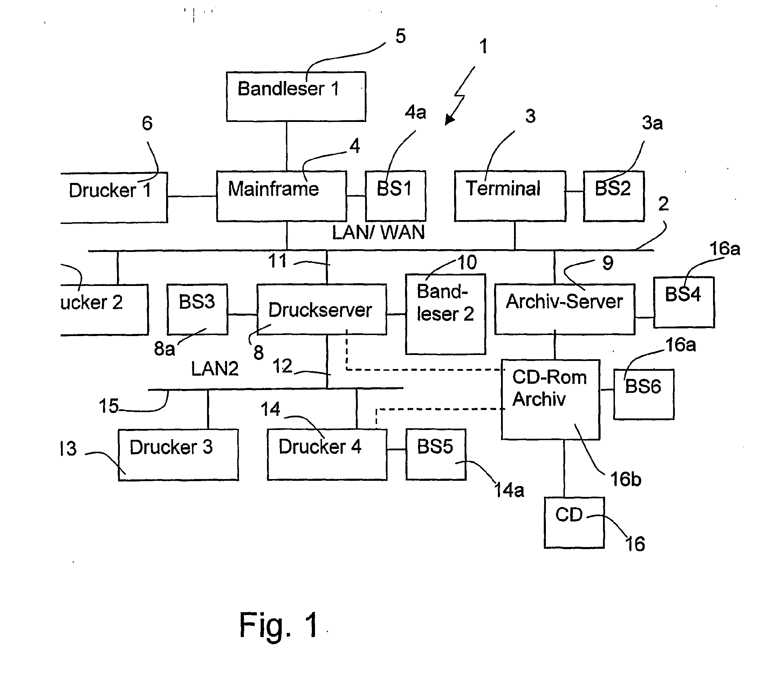

In Figur 1 ist ein Hochleistungsdrucksystem 1 gezeigt, bei welchem verschiedene System-Komponenten über ein Datennetzwerk 2, welches ein lokales Netz (Local Area Network, LAN) oder auch ein größeres Netzwerk (Wide Area Network, WAN) sein kann. An dem Netzwerk 2 hängt mindestens ein Client-Terminal 3, an dem Druckaufträge erzeugt werden können. Das Terminal 3 ist ein an sich bekannter Computer (z.B. Personal Computer PC) mit angeschlossenem Bildschirm 3a.

Die Druckaufträge können wahlweise auch auf einem Hauptcomputer (Main Frame) 4 erzeugt werden und/oder Daten von dem Main Frame 4 in den Druckauftrag eingefügt werden. Der Main Frame 4 des Rechenzentrums wird über eine geeignete Betriebssystem-Steuerung wie MVS, BS2000 oder VSE gesteuert. Am Main Frame 4 können Steuerungsfunktionen und Anzeigen über den daran angeschlossenen Bildschirm 4a erfolgen. An den Hauptcomputer 4 (Main Frame) ist außerdem ein Bandlesegerät 5 sowie ein erster Hochleistungsdrucker 6 direkt angeschlossen.

Am Datennetzwerk 2 sind außerdem ein zweiter Drucker 7, ein Druckserver 8 sowie ein Archivserver 9 angeschlossen. Der Druckserver 8 wiederum ist mit einem zweiten Bandlesegerät 10 sowie einem Bildschirm 8a verbunden. Zusätzlich zur Verbindung 11 zwischen dem Druckserver 8 und dem Haupt-Datennetz-werk 2 ist der Druckserver 8 über die Verbindung 12 mit einem zweiten, lokalen Netzwerk 15 verbunden, an dem weitere Drucker 13, 14 angeschlossen sind. Der Druckserver 8 sowie der Drucker 14 können optional mit einer Anlage 16b zur Produktion von Archivspeichern 16, z.B. mit einer Schreibeinrichtung für optische Speicherplatten (CD-ROM, DVD), Magnetspeicherplatten (magnetic disks), Bandspeicher, Kassettenspeicher, "write once read many" (WORM)-Einrichtungen, oder für andere, nicht löschbare Speicher, verbunden werden. Die Archivanlage 16 arbeitet aber hauptsächlich mit dem Archivserver 9 zusammen. Über zusätzliche Bildschirme 9a, 16a und 14 a können die jeweils mit ihnen verbundenen Geräte 9, 16 und 14 bedient und optional auch Verbindungen zu anderen, an das Netzwerk 2 angeschlossene Komponenten hergestellt werden.

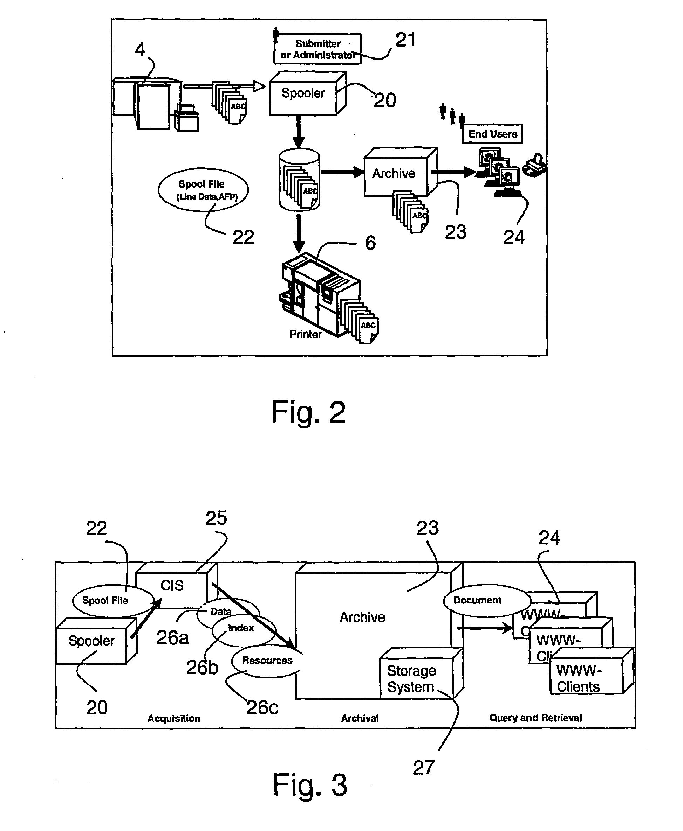

Figur 2 zeigt Grundkomponenten für die Archivierung. Der von dem Host Computer 4 abgegebene Datenstrom wird in einem Spooler 20 gesammelt, wobei Parameter des Spoolers 20 von einem Bediener über eine Administrator-Einheit 21 eingegeben bzw. bereitgestellt werden. Der Spooler 20 ist als Software-Programm im Druckserver 8 oder im Host-Computer 4 installiert. Er nutzt verschiedene Einrichtungen (Interfaces, Speicher, Bussystem) des Servers 8 und/oder des Host-Computers 4. Der Spooler 20 gibt dann eine Spool-Datei 22 aus und führt sie dem Drucker 6 und/oder einer Archivierungskomponete 23 zu. Von dort können die einzelnen Dokumente auf Arbeitsplätzen 24 zur Anzeige gebracht oder wiederum ausgedruckt werden.

Die Spool-Datei kann in verschiedenen Datenformaten, beispielsweise im Zeilendatenformat (Line Data) oder im AFP-Format übertragen werden. Im Zuge der Archivierung werden die Dokumente mit allen benötigten Informationen abgespeichert, so dass es in originaler Druckqualität jederzeit wieder abgerufen und dupliziert werden kann, selbst wenn sich die Computersystem-Umgebung oder die Druckumgebung zu einem späteren Zeitpunkt geändert hat. Die Arbeitsplätze 24 können auf die Archivkomponente 23 insbesondere über ein Netzwerk zugreifen, beispielsweise auch über das Internet, wobei der Zugriff dabei durch an sich bekannte Browser-Technologien wie dem Browser Microsoft Internet Explorer® oder dem Netscape Communicator® eingesetzt werden können.

Figur 3 zeigt einige Details und beteiligte Komponenten der Archivierung. Innerhalb der Spooling-Einheit 20 wird überprüft, ob eine Spooling Datei zu archivieren ist. Ggf. wird die Spooling Datei einem Programm Modul 25 zugeführt, welches aus der Spool-Datei drei Datensätze erzeugt, nämlich variable Daten 26a, Indexdaten 26b und Resourcendaten 26c. Zur Erzeugung dieser drei Datensätze ist insbesondere eine Konvertierungs-, Indizierungs-, Sortierungseinheit (CIS) vorgesehen, wie sie in der bereits eingangs genannten deutschen Patentanmeldung Nr. 100 17 785.9 der Anmelderin beschrieben ist.

Die Datensätze 26a, 26b und 26c werden dann dem Speichersystem 27 (umfassend den CD ROM Archivspeicher 16 und den Archivserver 9) zugeführt und können später von den über das Netzwerk angebundenen Arbeitsplätzen 24 abgefragt und abgerufen werden.

Figur 4 zeigt Details des Spooling Systems 20. Datenströme, insbesondere AFP-Datenströme, die am Eingangsmodul 30 ankommen, werden im Druckauftragsgenerator 31 mit den Resourcendaten verbunden. Dazu können dem Druckauftrag entsprechende Archivierungsregeln, wie z.B. die Angabe einer Sammlung von Indizierungsparametern (Dokument Templates), Zugriffsinformationen etc. bereits bei der Erstellung des Druckauftrags in einem Anwenderprogramm oder im Host Computer beigefügt werden. Im Archiverkennungsmodul 32 wird der vollständige Druckauftrag (job) auf Parameter untersucht, die festlegen, dass der Druckauftrag zu archivieren ist. Nach dem Erkennen eines Archivierungsparameters leitet es den Druckauftrag an die Indizierungskomponente 25 weiter. Im Druckauftrag enthaltene Attribute, beispielsweise die o.g. Archivierungsregeln oder typische Attribute innerhalb des MO:DCA Datenstroms, können dabei in entsprechende Attribute umgesetzt werden, die das Archivsystem erkennt. Die Eingangsattribute bzw. Eingangsparameter können dabei hinsichtlich ihrer Gültigkeit und Vollständigkeit abgeprüft werden. Falls in diesen, im Druckdatenstrom enthaltenen Parametern Fehler enthalten sind, werden diese mit einem Korrekturprogramm erkannt und ggf. korrigiert.

In Figur 5 sind nochmals wesentliche Einheiten der Archivierungskomponente 23 gezeigt, sowie verschiedene, damit zusammenwirkende andere Komponenten. Die Archivierungskomponente 23 wird von Eingangsparameter und Regeln 31 gesteuert, die in einer Steuerungsdatei 39 abgelegt sind. Diese Parameter und Regeln werden zum über eine Administratoranwendung 32 manuell über ein grafisches Benutzer-Interface (graphical user interface, GUI) oder über ein Interface auf Kommandoebene (command line interface, CLI) in die Archivierungskomponente 23 eingegeben. Alternativ dazu können diese Parameter und Regeln 31 auch automatisch durch Anwendungen 33, 34, 35 der Archivierungskomponente 23 über ein Interface auf Anwendungsprogrammebene (application program interface, API) zugeführt werden.

Die Archivierungskomponente 23 enthält zur Verarbeitung der Druckdatenströme drei Verarbeitungskomponenten:

### Erste Komponente: Datenbeschaffung (Data Acquisition)

Eine erste Verarbeitungskomponente ist die Datenbeschaffungskomponente 36. Mit ihr wird gesteuert, über welchen Weg (Schnittstelle) der Datenstrom bzw. die darin enthaltenen Dokumente in das Archivierungssystem 23 aufgenommen werden, beispielsweise über die oben genannte Indizierungseinheit 25. Sie bildet damit quasi ein Eintrittstor (Entry Point) in das Archivsystem. Die Flexibilität und Schnelligkeit des Systems ergibt sich insbesondere dadurch, dass über die automatische Definition von Regeln und Eingangsparametern (vergleiche Anwendungen 33, 34, 35) Daten vollautomatisch in das Archivierungssystem 23 aufgenommen werden können. Das ermöglicht insbesondere in Hochleistungsdruckumgebungen, dass große Spooling Dateien, die regelmäßig eine ähnliche oder identische Struktur haben, vollautomatisch mit hoher Geschwindigkeit in das Speichersystem aufgenommen werden. Derartige große Spooling Dateien haben häufig eine bekannte Datenstruktur, wodurch die Bearbeitung derartiger Druckströme nach vorgegebenen Regeln erfolgen kann. Diese Regeln können entweder innerhalb des Datenstroms enthalten sein und automatisch in das Archivierungssystem 23 eingespielt werden, oder sie können manuell über das Administratormodul 32 erzeugt werden und als Indexparameterset in der Datenbank 39 des Speichersystems hinterlegt werden.

Um die Archivierung vollautomatisch korrekt steuern zu können, müssen Archivierungsregeln festgelegt werden. Im vorliegenden System können dabei zum einen Regeln über Eigenschaften und Beschreibungen des Datenstroms sowie Sets von Indizierungsparametern (Document Templates) angegeben werden und zum anderen Sicherheitsparameter.

Die Indizierungsparameter bestehen aus Werten, die für den Anwender hinsichtlich der Dokumenteninformationen oder Dokumententypen von Bedeutung sind. Sie können im Zuge der späteren Dokumentensuche (Retrieval) dazu verwendet werden, Dokumente anhand dieser Parameter einfach aufzufinden. Beispielsweise können bei Literaturdaten der Autor, der Titel oder die ISBN-Nummer als Indizierungsparameter verwendet werden oder bei Rechnungen die Rechnungsnummer, das Rechnungsdatum, der Rechnungsadressat oder seine Kundennummer. Derartige Attribute können entweder manuell über das Administrator-Interface 32 eingegeben werden oder automatisch direkt aus den Dokumentendaten bzw. aus den Anwenderprogrammen 33, 34, 35, in welchen die Dokumente bzw. der Druckdatenstrom erzeugt wurden, übernommen werden.

Neben den Eingabeparametern können auch Regeln vergeben werden, nach denen Archivierungsparameter auf Informationen im Datenstrom oder umgekehrt angewandt werden. Auch dabei ist es zum einen möglich, derartige Regeln bereits im Datenstrom bzw. in den Datenstrom erzeugenden Anwendungen 33, 34, 35 anzugeben, oder die Regeln mit dem Administrator-Interface 32 im Archivsystem festzulegen.

### Zweite Komponente: Datenzuordnung (Data Attribution)

Wenn die Datenbeschaffung abgeschlossen ist, werden innerhalb einer Datenzuordnungskomponente 37 Zuordnungswerte gesammelt und/oder aus dem Datenstrom extrahiert, die benötigt werden, um das Dokument innerhalb des Archivsystems korrekt anzuordnen. Diese Attribute erlauben das spätere Finden des Dokuments genauso wie das Absichern eines Dokuments vor unberechtigtem Zugriff. Die Zuordnung basiert auf den Eingangsparametern, die in der Datenbeschaffungsphase von der Datenbeschaffungskomponete 36 ermittelt wurden.

### Dritte Komponente: Datenspeicherung (Data Storage)

Wenn die Datenzuordnung abgeschlossen ist, können die Dokumente zusammen mit ihren Attributen im Archiv abgespeichert werden, wobei die Dokumente in einem Dokumentenbereich abgelegt werden, mit einer individuellen Dokumentennummer versehen und über diese Dokumentennummer mit ihren Attributen logisch verbunden werden. Die Attribute werden in einer Kontrolldatenbank 39 des Speichersystems abgelegt. Die Dokumentendaten und ggf. Resourcen, die zu diesen Dokumentendaten gehören, werden im Speicherbereich 40 des Archivspeichers abgelegt.

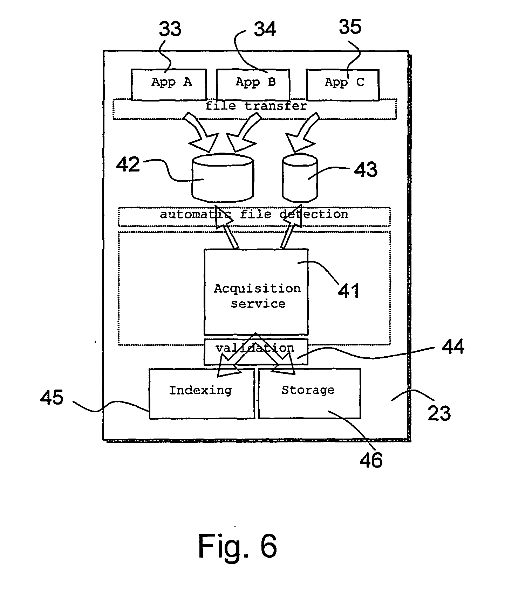

In Figur 6 ist gezeigt, wie die Phase der Datenbeschaffung (Data Acquisition) innerhalb der Archivierungskomponente 23 gesteuert wird.

Dazu ist eine Acquisition Service-Routine 41 vorgesehen, die ständig überwacht, ob neue Dateien in vorbestimmten Speicherbereichen (Ordnern) 42, 43 von den Anwendungen 33, 34, 35 abgelegt wurden. Jeder Ordner (shared folder) bildet damit eine Eingangsschnittstelle (entry point) für den Archivierungsprozess. Dabei ist einem bestimmten Ordner (z.B. 42) auch ein bestimmtes Dokument Template zugeordnet, mit dem die in dem Ordner abgelegten Dateien verarbeitet werden. Sobald ein neues Dokument in einem der Ordner 42, 43 von dem Acquisition Service Daemon 41 entdeckt wurde, überprüft dieses, ob in dem Dokument bzw. in der neu abgelegten Datei Daten enthalten sind, die zur Archivierung vorgesehen sind. Eine Validierungseinheit 44 vergleicht dann die Daten der im Ordner 42 bzw. 43 abgelegten Datei mit der im zugeordneten Dokument Template abgespeicherten Sammlung von Parametern hinsichtlich ihres Datentyps. Ist beispielsweise in dem Dokument Template hinterlegt, dass der Datentyp eine bestimmte Information vom Typ "Zeit" ist, dann muß eine entsprechende Information im Datenstrom ebenfalls diesen Datentyp aufweisen. Andernfalls wird ein Fehler gemeldet.

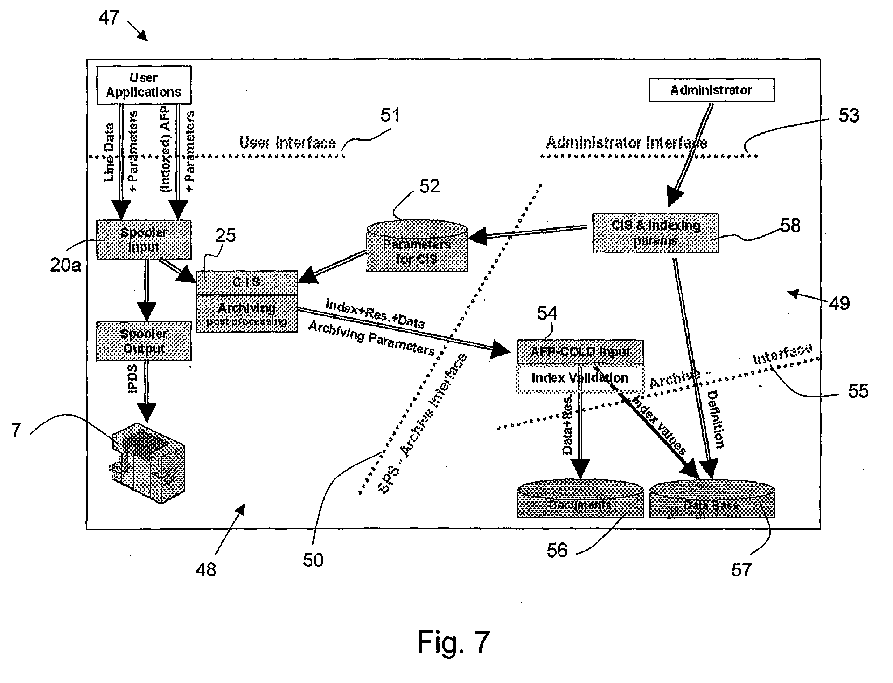

In Figur 7 sind nochmals wesentliche Systemkomponenten gezeigt, aus denen auch der Gesamtablauf der Archivierung von Druckdaten deutlich wird.

Das Archivierungssystem 47 umfasst eine Druckumgebung 48 und eine Archivumgebung 49. Sie sind durch eine Archivschnittstelle 50 verbunden. Druckdaten, die in Anwenderprogrammen erzeugt und/oder vom Host Computer bereit gestellt werden, werden über die Benutzerschnittstelle 51 dem Spooler Input 20a zugeführt, vom dem sie entweder direkt dem Spooler Output zur Zuführung an einen Drucker 7 weitergeleitet oder einer Indizierungskomponente 25 zugeführt werden. Diese Indizierungskomponente 25 (CIS) bildet anhand von Parametern, die in einer Parameterdatei 52 abgespeichert sind und welche von einem Administrator über eine Administrator-Schnittstelle wie einem Graphical User Interface (GUI), einem CLI oder einem API erzeugt wurden, Archivdaten.

Anhand der CIS-Parameter erzeugt die Indizierungskomponente 25, welche z.B. der in DE 100 17 785.9 beschriebenen Einheit entspricht, eine Index-Datei, eine Resourcen-Datei und eine Datei mit variablen Daten. Diese drei Dateien werden über die Archivschnittstelle 50 dem Archivierungsmodul 54 zugeführt, in welchem diese jeweiligen Dateien so aufbereitet werden, dass variable Daten und Resourcen über die Dauerspeicher-Schnittstelle einem Massenspeicher 56 (z.B. CD ROM) zugeführt werden können. Die Indexdaten werden in einer Datenbank 57 abgespeichert, über die später in einem Suchvorgang (Retrieval) entsprechender Zugriff auf die Massenspeicher 56 erfolgen kann. In der Datenbank werden auch die Indizierungsparametersets (Document Templates) abgespeichert, die vom Administrator über das Interface 53 eingegeben wurden. Archivparameter können somit über den Ursprungsjob, über das CIS-Modul, über das Interface 53 oder innerhalb des Archivsystems 54 festgelegt sein.

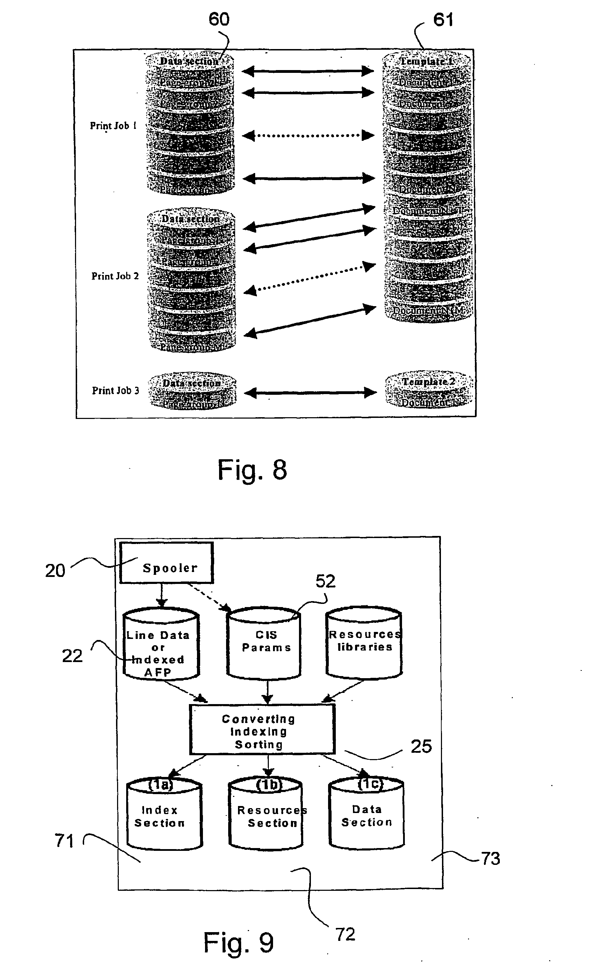

Figur 8 zeigt die logische Zuordnung von Datensektionen und Seitengruppen (page groups) in verschiedenen Print-Jobs eines AFP-Druckdatenstroms 60 einerseits und der im Archivsystem hinterlegten Dokument Templates 61, die jeweils eine Sammlung von Indizierungsparametern enthalten. Die Dokument Templates 60 stellen jeweils eine Sammlung von Indexparametern dar, die einen Namen trägt und zur Steuerung der Indizierung im Archiv verwendet wird. Ein Dokument Template wird während der Aquisitionsphase in den Archivierungsparametern verwendet. Die indizierbaren Daten, die in den jeweiligen zu archivierenden Dokumenten enthalten sind, werden deshalb anhand der Dokument Template Struktur analysiert und in der Indexdatenbank abgespeichert.

Wie aus Figur 8 zu erkennen ist, besteht zwischen einzelnen Print Jobs und den Dokument Templates eine n:1 Beziehung, d.h. verschiedene Dokumente, die einem Dokument Template zuzuordnen sind, können aus verschiedenen Druckjobs stammen. Aufgrund dieser Struktur können also mit relativ wenigen Dokument Templates eine Vielzahl von Dokumenten verwaltet werden. Innerhalb der Datenbank 57, in der die Dokument Templates gespeichert sind, wird dadurch nur relativ wenig Speicherplatz benötigt, wodurch auch die Suchgeschwindigkeit beim Wiederauffinden von Dokumenten zugunsten des Benutzers sehr schnell ist.

In Figur 9 sind nochmals die wesentlichen Systemkomponenten gezeigt, die in der CIS-Komponente gemäß DE 100 17 785.9 vorgesehen sind. Die von dieser CIS-Komponente erledigten Aufgaben lassen sich wie folgt kurz beschreiben:

Die von der Spooler-Komponente 20 enthaltenen Daten 22 werden in eine plattformunabhängige Datenstruktur (Format MO:DCA/P) konvertiert, dann werden Index-Informationen anhand der CIS-Parameter 52 aus dem konvertierten Datenstrom extrahiert und in einer Index-Datei 71 abgespeichert. Resourcendaten werden in der Datei 72 abgespeichert und die variablen Daten werden in der Datei 73 abgespeichert. Außerdem ist die CIS-Komponente in der Lage, die Daten entsprechend der Parameter 52 umzusortieren. Die wesentlichen, für die Archivierung nützlichen Funktionen sind die physikalische Trennung des Eingangsdatenstroms in drei Bereiche, nämlich Indexbereich, Resourcenbereich und Datenbereich, das Vorliegen der Daten in einem einheitlichen Format (MO:DCA-P) und die logische Aufteilung des Datenstroms in individuelle Dokumente. Je nach Typ der Eingabedaten (Line Data oder MO:DCA-P Data) können die individuellen Dokumente eines Druckjobs alle vom selben Typ sein (Line Data Input) oder können völlig verschieden sein (MO:DCA-P Input).

Wie in DE 100 17 785.9 beschrieben, wird zur Ausgabe von Daten auf einem Drucker die oben genannte Sortierungsfunktion genutzt, diese ist jedoch für die Archivierungszwecke nicht unbedingt erforderlich.

Wenn die Eingangsdaten im AFF-Format vorliegen, so können diese Daten bereits Indexinformationen enthalten. Eine Indexinformation wird dabei bereits in der Anwender-Anwendung in Form von AFP-Indexinformationen (index sections, index tags) in den Eingangsdatenstrom integriert. Die Komponente CIS 25 extrahiert diese Informationen und schreibt sie direkt in die Indexdatei 71. Die Indizierung ist dabei sowohl auf einem Page Group Level als auch auf einem Page Level möglich.
Außerdem ist es möglich, dass von dem Anwenderprogramm zusätzliche Archivierungsinformationen wie z.B. die Dokumentenart (classification information) oder Sicherheitsinformationen in den Druckstrom integriert werden.

Wenn der Eingangsdatenstrom im Line Datenformat vorliegt, dann kann die Komponente CIS 25 dynamisch Daten aus dem Datenstrom auf einem Page Group Level zum Zwecke der Indizierung extrahiert. Dies wird durch Bereitstellung entsprechender Information über den Ort der Attributwerte in den Daten realisiert. Der Datenstrom bzw. die ihn erzeugende Anwendung müssen dann die Indexinformationen nicht einfügen und brauchen deshalb nicht modifiziert zu werden.

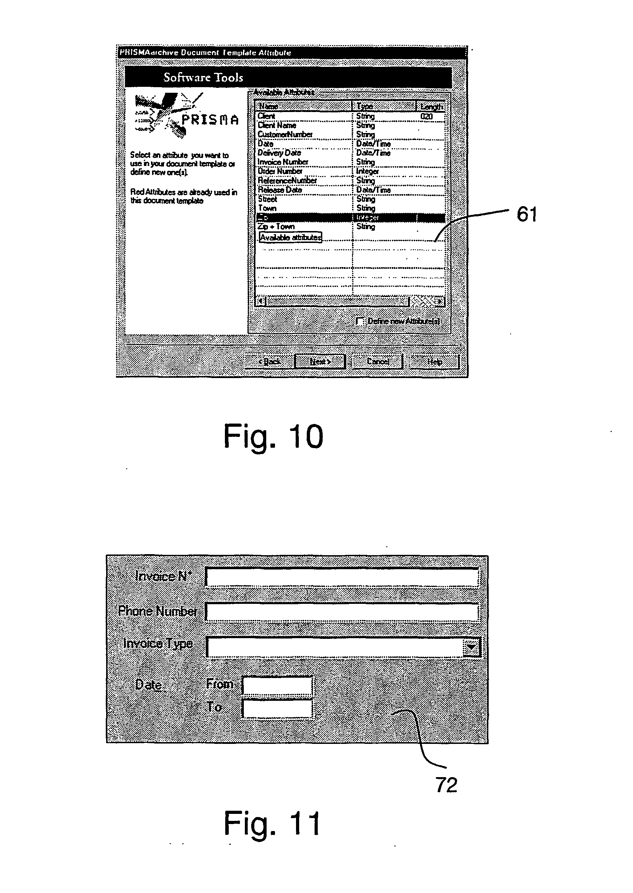

Figur 10 zeigt einen typischen Inhalt eines Dokument Templates 61, in dem Anwendernummer (client) Anwendername (client name), Kundennummer (customer number) etc. angegeben sind.

In Figur 11 ist gezeigt, wie im Zuge des Wiederauffindens (Retrieval) von Dokumenten die zuvor beim Archivieren erzeugten Dokument Templates verwendet werden. Aus einem Dokument Template wird dabei automatisch eine Suchmaske 72 gebildet, indem bestimmte Inhalte des Dokument Template, z.B. Rechnungsnummer, Telefonnummer oder Invoice Typ verwendet und zum Aufbau einer Suchmaske bereit gestellt werden. Dadurch wird als dokumentenspezifisch eine Suchmaske angeboten, die alle Daten enthält, welche indiziert sind und somit ein schnelles Auffinden eines Dokuments erlaubt.

Es wurden Ausführungsbeispiele der Erfindung beschrieben. Dabei ist klar, dass für die vorliegende Erfindung nicht alle in den Ausführungsbeispielen gezeigten Komponenten vorhanden sein müssen. Insbesondere sind in der Figur 1 verschiedene Komponenten wie das Bandlesegerät sowie das zweite Netzwerk 15 mit allen seinen angeschlossenen Geräten optional vorhanden. Andererseits können Weiterentwicklungen der Erfindung mit zusätzlichen oder leicht modifizierten Komponenten ohne weiteres angegeben werden. Weiterhin kann die Erfindung sowohl mittels elektronischen Komponenten (Hardware) als auch durch Computerprogrammelemente (Software oder Softwaremodule) realisiert werden. Die Erfindung wird dabei insbesondere aus einer Kombination von elektronischen Hardware-Elementen und Softwareelementen realisiert. Sie wirkt systemübergreifend über mehrere Komponenten wie einen Host Computer, einen Spooler, einer Indizierungseinheit und einer CD-ROM Archivierungseinheit. Dementsprechend erfaßt die Erfindung auch Komponenten, die auf elektronischen Datenträgern, über Computernetzwerke (Internet) verbreitet werden und/oder auf Computern, Servern und insbesondere im Zwischenspeichern bereit gehalten werden.

### Bezugszeichenliste

- 1: Drucksystem
- 2: Haupt-Datennetzwerk
- 3: Client-Terminal
- 3a: zweiter Bildschirm
- 4: Hauptcomputer
- 4a: erster Bildschirm
- 5: erstes Bandlesegerät
- 6: erster Drucker
- 7: zweiter Drucker
- 8: Druck-Server
- 8a: dritter Bildschirm
- 9: Archiv-Server
- 10: zweites Bandlesegerät
- 11: erste Netzwerkverbindung
- 12: zweite Netzwerkverbindung
- 13: dritter Drucker
- 14: vierter Drucker
- 14a: fünfter Bildschirm
- 15: zweites Netzwerk
- 16: CD-ROM-Archivspeicher
- 16a: zusätzliche Bildschirme
- 16b: CD-ROM Schreibeinrichtung
- 20: Spooler
- 20a: Spooler Input
- 20b: Spooler Output
- 21: Administrator-Einheit für Spooler
- 22: Spooler Datei
- 23: Archivierungskomponente
- 24: Arbeitsplätze
- 25: CIS-Komponente
- 26a: Variable Daten
- 26b: Indexdaten
- 26c: Resourcendaten
- 27: Speichersystem
- 30: Eingangsinterface
- 31: Eingangsparameter zur Indizierung
- 32: Administrator-Komponente
- 33,34,35: Anwendungen
- 36: Datenbeschaffungskomponente
- 37: Datenzuordnungskomponente
- 38: Datenspeicherungskomponente
- 39: Datenbank
- 40: Datenspeicherbereich
- 41: Acquisition Service
- 42: Ordner (Zwischenspeicher)
- 43: Ordner (Zwischenspeicher)
- 44: Validierungs-Einheit
- 45: Indizierung
- 46: Speicherung
- 47: Archivierungssystem
- 48: Druckumgebung
- 49: Archivumgebung
- 50: Archivschnittstelle
- 51: Benutzerschnittstelle
- 52: CIS-Parameterdatei
- 53: Administrator-Schnittstelle
- 54: Archivierungsmodul
- 55: Dauerspeicher-Schnittstelle
- 56: Dauerspeicher
- 57: Retrieval-Datenbank
- 58: Indizierungsparameter
- 60: AFP-Druckdatenstrom
- 61: Dokument Template
- 70: Index-Datei

## Patentansprüche

1. Verfahren zum Archivieren von Druckdatenströmen, die von einem Computer (4) abgegeben werden, bei dem
- aus einer Vielzahl möglicher Indizierungsparameter (58) mehrere Indizierungssets (61) gebildet und abgespeichert werden, die jeweils eine Gruppe von Indizierungsparametern enthalten,
- ein zu archivierender Druckdatenstrom einer Indizierungseinheit (25) zugeführt wird (41),
- dem Druckdatenstrom ein Indizierungsset (61) zugeordnet wird,
- aus dem Druckdatenstrom anhand des Indizierungssets (61) Indexdaten (26b) gebildet werden,
- aus dem Druckdatenstrom individuelle Dokumentendaten gebildet werden und
- zusammengehörige Indexdaten und Dokumentendaten mittels Kennummern logisch verbunden und in einem Archivspeicher (16, 23) abgelegt werden.

2. Verfahren nach Anspruch 1, wobei die Indizierungssets (61), in einem vorbestimmten Speicherbereich des Computers (4) und/oder im Druckdatenstrom enthalten sind.

3. Verfahren nach einem der Ansprüche 1 oder 2, wobei der Datenstrom dateiweise in einem Zwischenspeicher (42, 43) abgelegt wird.

4. Verfahren nach Anspruch 3, wobei mehrere Zwischenspeicher (42, 43) vorgesehen sind und die Dateiablage derart gesteuert wird, dass in einem vorbestimmten Zwischenspeicher (42, 43) jeweils nur Dateien abgelegt werden, denen ein und dasselbe Indizierungsset (61) zugeordnet sind.

5. Verfahren nach Anspruch 4, wobei der Zwischenspeicher (42, 43) von einem Überwachungsmodul fortwährend auf neu hinzugekommene Dateien überwacht und nach dem Feststellen einer neuen Datei eine Indizierung der Daten der neuen Datei eingeleitet wird.

6. Verfahren nach Anspruch 5, wobei eine Datei nach der Ablage im Zwischenspeicher (42, 43) automatisch einer Datenvalidierungskomponente (44) zugeführt wird, in der Daten des Datenstroms hinsichtlich Ihres Datenformats mit den Ihnen zugeordneten Indizierungsparametern verglichen und mit dem Ergebnis auf Ihre Archivierungs-Integrität überprüft werden.

7. Verfahren nach einem der vorhergehenden Ansprüche wobei automatisch geprüft wird, ob das Indizierungsset (61) bestimmte zur Archivierung benötigten Indizierungsdaten enthält und je nach Überprüfungsergebnis entweder fehlende Indizierungsdaten automatisch ergänzt oder zur Auswahl angeboten oder zur Eingabe abgefragt werden.

8. Verfahren nach einem der vorhergehenden Ansprüche, wobei zusätzlich zu den Indexdaten eines Indizierungssets ergänzende Indexdaten archiviert werden, die dokumentenspezifisch aufgrund von Indizierungsdaten, die im Druckdatenstrom enthalten sind, gebildet werden.

9. Verfahren nach einem der vorhergehenden Ansprüche, wobei zusätzlich zu den Indexdaten Zugangsberechtigungsdaten dokumentenweise im Archiv (16, 23) abgespeichert werden.

10. Verfahren nach einem der vorhergehenden Ansprüche, wobei Zuordnungsregeln für die Zuordnung der Indizierungssets (61) und/oder der Zugangsberechtigungsdaten vorgegeben werden, insbesondere druckauftragsweise oder dokumentenweise, bevor die Zuordnung erfolgt.

11. Verfahren nach einem der vorhergehenden Ansprüche, wobei die Zuordnung des Indizierungssets zum Druckdatenstrom automatisch anhand von Indizierungsinformationen erfolgt, die im Druckdatenstrom enthalten sind.

12. Verfahren nach einem der vorhergehenden Ansprüche, wobei aus Ressourcen, die in dem Druckdatenstrom enthalten sind, zusätzlich Ressourcendaten gebildet werden, die mit den Dokumentendaten und den Indexdaten über die Dokumentennummer logisch verknüpft sind.

13. Verfahren nach einem der vorhergehenden Ansprüche, wobei im Archivspeicher (16, 23) jeweils für mehrere Dokumente eine Indexinformationsdatei (61) abgelegt wird, in der die zu den Dokumenten gebildeten Indices enthalten sind.

14. Verfahren nach Anspruch 13, wobei die Indexinformationsdatei (61) zum Bilden einer Suchmaske (72) verwendet wird, wenn nach den Dokumenten gesucht wird.

15. Verfahren nach einem der vorhergehenden Ansprüche, wobei der Datenstrom auf ein vorbestimmtes Datenformat konvertiert wird, bevor in der Indizierungseinheit die Indexdaten gebildet werden.

16. Verfahren nach einem der vorhergehenden Ansprüche, wobei der Datenstrom ein Advanced-Function-Presentation-Datenstrom, insbesondere im Format MO:DCA, ist.

17. Verfahren nach einem der vorhergehenden Ansprüche, wobei
- der Druckdatenstrom vom Computer (4) einer Spooling-Einrichtung zugeführt wird, in der gleichzeitig mehrere Druckdatenströme zwischenspeicherbar sind und von dem der Druckdatenstrom einem Druckgerät (6, 7) zugeführt wird
und
- der Druckdatenstrom in der Spooling-Einheit (20) von einem Detektor-Modul (32) untersucht wird und bei Feststellung vorbestimmter Archivierungs-Informationen einer Archivierungseinheit (23) zugeführt wird.

18. Vorrichtung zum Durchführen eines Verfahrens nach einem der Ansprüche 1 bis 17.

19. Computerprogrammprodukt, welches beim Laden und Ablaufen auf einem oder mehreren Computern ein Verfahren nach einem der Ansprüche 1 bis 17 bewirkt.

## Claims

1. Method for archiving print data streams which are output by a computer (4), in which
- from a plurality of possible indexing parameters (58) several indexing sets (61) are formed and stored, which each contain a group of indexing parameters,
- a print data stream to be archived is supplied (41) to an indexing unit (25),
- an indexing set (61) is assigned to the print data stream,
- from the print data stream index data (26b) are formed on the basis of the indexing set (61),
- from the print data stream individual document data are formed, and
- index data and document data belonging together are logically linked by means of identification numbers and are stored in an archive storage (16, 23).

2. Method according to claim 1, wherein the indexing sets (61) are contained in a predetermined storage area of the computer (4) and/or in the print data stream.

3. Method according to one of the claims 1 or 2, wherein the data stream is stored in an intermediate storage (42, 43) on a file-by-file basis.

4. Method according to claim 3, wherein several intermediate storages (42, 43) are provided and the filing of the data files is controlled such that in a predetermined intermediate storage (42, 43) only files are stored each time to which one and the same indexing set (61) is assigned.

5. Method according to claim 4, wherein the intermediate storage (42, 43) is continuously monitored by a monitoring module with respect to newly added data files and, after a new data file has been determined, an indexing of the data of the new data file is initiated.

6. Method according to claim 5, wherein, after filing in the intermediate storage (42, 43), a data file is automatically supplied to a data validation component (44), in which data of the data stream are compared in terms of their data format with the indexing parameters assigned to them, and are checked with the result in terms of their archiving integrity.

7. Method according to one of the preceding claims, wherein it is automatically checked whether the indexing set (61) includes specific indexing data required for archiving and, dependent on the result of the check, missing indexing data are either automatically added or offered for selection or queried for input.

8. Method according to one of the preceding claims, wherein, in addition to the indexing data of an indexing set, supplementary indexing data are archived which are formed in a document-specific manner on the basis of indexing data contained in the print data stream.

9. Method according to one of the preceding claims, wherein, in addition to the indexing data, access authorization data are stored on a document-by-document basis in the archive (16, 23).

10. Method according to one of the preceding claims, wherein assignment rules for the assignment of the indexing sets (61) and/or the access authorization data are predetermined, in particular on a print job-by-print job basis or a document-by-document basis, before the assignment takes place.

11. Method according to one of the preceding claims, wherein the assignment of the indexing set to the print data stream takes place automatically on the basis of indexing information contained in the print data stream.

12. Method according to one of the preceding claims, wherein from resources which are included in the print data stream, in addition resource data are formed which are logically linked to the document data and the index data via the document number.

13. Method according to one of the preceding claims, wherein in the archive storage (16, 23) an index information data file (61) is stored for several documents each time, in which data file the indices formed with respect to the documents are included.

14. Method according to claim 13, wherein the index information data file (61) is used for forming a search mask (72) when the documents are searched for.

15. Method according to one of the preceding claims, wherein the data stream is converted to a predetermined data format before the index data are formed in the indexing unit.

16. Method according to one of the preceding claims, wherein the data stream is an Advanced Function Presentation data stream, in particular in the format MO:DCA.

17. Method according to one of the preceding claims, wherein
- the print data stream is supplied from the computer (4) to a spooling device in which several print data streams can be intermediately stored at the same time and from which the print data stream can be supplied to a printer device (6, 7)
and
- the print data stream is examined in the spooling unit (20) by a detector module (32) and when predetermined archiving information is determined it is supplied to an archiving unit (23).

18. Device for carrying out a method according to one of the claims 1 to 17.

19. Computer program product which, when loaded and executed on one or more computers, performs a method according to one of the claims 1 to 17.

## Revendications

1. Procédé d'archivage de flux de données d'impression, qui ont été envoyés par un ordinateur (4), procédé dans lequel
- à partir d'une pluralité de paramètres d'indexation (58) possibles sont formés et sont mémorisés plusieurs ensembles d'indexation (61), qui contiennent chacun un groupe de paramètres d'indexation,
- un flux de données d'impression à archiver est acheminé (41) vers une unité d'indexation (25),
- un ensemble d'indexation (61) est associé au flux de données d'impression,
- des données d'index (26b) sont formées à partir du flux de données d'impression à l'appui de l'ensemble d'indexation (61),
- des données de documents individuelles sont formées à partir du flux de données d'impression, et
- des données d'index et des données de documents associées sont liées logiquement au moyen de numéros d'identification, et sont stockées dans une mémoire d'archivage (16, 23).

2. Procédé selon la revendication 1, dans lequel les ensembles d'indexation (61) sont contenus dans une zone de mémoire prédéterminée de l'ordinateur (4) et/ou dans le flux de données d'impression.

3. Procédé selon la revendication 1 ou 2, dans lequel le flux de données est stocké par fichiers dans une mémoire temporaire (42, 43).

4. Procédé selon la revendication 3, dans lequel il est prévu plusieurs mémoires temporaires (42, 43), et le stockage des fichiers est commandé de telle sorte que dans une mémoire temporaire (42, 43) prédéterminée sont stockés dans chaque cas seulement des fichiers auxquels est associé un seul et même ensemble d'indexation (61).

5. Procédé selon la revendication 4, dans lequel la mémoire temporaire (42, 43) est surveillée en permanence par un module de surveillance en vue de détecter l'arrivée de nouveaux fichiers et, à la suite de la détection d'un nouveau fichier, il est déclenché une indexation des données du nouveau fichier.

6. Procédé selon la revendication 5, dans lequel un fichier, après avoir été stocké dans la mémoire temporaire (42, 43), est acheminé automatiquement vers une composante de validation des données (44), dans laquelle des données du flux de données sont comparées, sur le plan de leur format de données, avec les paramètres d'indexation qui leur sont associés, et sont contrôlées avec le résultat de leur intégrité d'archivage.

7. Procédé selon l'une quelconque des revendications précédentes, dans lequel il est contrôlé automatiquement si l'ensemble d'indexation (61) contient des données d'indexation déterminées, nécessaires pour l'archivage, et, en fonction de chaque résultat de contrôle, les données d'indexation manquantes sont automatiquement complétées, ou sont proposées en vue d'une sélection, ou sont interrogées en vue de leur entrée.

8. Procédé selon l'une quelconque des revendications précédentes, dans lequel, en plus des données d'index d'un ensemble d'indexation, sont archivées également des données d'index complémentaires, qui sont formées de manière spécifique aux documents sur la base de données d'indexation qui sont contenues dans le flux de données d'impression.

9. Procédé selon l'une quelconque des revendications précédentes, dans lequel, en plus des données d'index, des données d'autorisation d'accès sont mémorisées par documents dans la mémoire d'archivage (16, 23).

10. Procédé selon l'une quelconque des revendications précédentes, dans lequel des règles d'association pour l'association des ensembles d'indexation (61) et/ou des données d'autorisation d'accès sont prédéfinies, en particulier par instructions d'impression ou par documents, avant que l'association ne soit effectuée.

11. Procédé selon l'une quelconque des revendications précédentes, dans lequel l'association de l'ensemble d'indexation avec le flux de données d'impression est effectuée automatiquement à l'appui d'informations d'indexation qui sont contenues dans le flux de données d'impression.

12. Procédé selon l'une quelconque des revendications précédentes, dans lequel, à partir de ressources qui sont contenues dans le flux de données d'impression, sont formées, en plus, des données de ressources qui sont combinées logiquement avec les données de document et les données d'index par l'intermédiaire du numéro de document.

13. Procédé selon l'une quelconque des revendications précédentes, dans lequel dans la mémoire d'archivage (16, 23) est entré, respectivement pour plusieurs documents, un fichier d'informations d'index (61), dans lequel sont contenus les index formés pour les documents.

14. Procédé selon la revendication 13, dans lequel le fichier d'informations d'index (61) est utilisé pour former un masque de recherche (72) lorsque les documents sont recherchés.

15. Procédé selon l'une quelconque des revendications précédentes, dans lequel le flux de données est converti dans un format de données prédéterminé avant que les données d'index soient formées dans l'unité d'indexation.

16. Procédé selon l'une quelconque des revendications précédentes, dans lequel le flux de données est un flux de données de présentation de fonctions évoluées (Advanced-Function-Presentation), en particulier dans le format MO:DCA.

17. Procédé selon l'une quelconque des revendications précédentes, dans lequel
- le flux de données d'impression est acheminé depuis l'ordinateur (4) vers un agencement de spooling, dans lequel plusieurs flux de données d'impression peuvent être mémorisés temporairement en même temps et à partir duquel le flux de données d'impression est acheminé vers un dispositif d'impression (6, 7), et
- le flux de données d'impression dans l'unité de spooling (20) est examiné par un module de détection (32) et, en cas de détection d'informations d'archivage prédéterminées, est acheminé vers une unité d'archivage (23).

18. Dispositif destiné à la mise en oeuvre d'un procédé selon l'une quelconque des revendications 1 à 17.

19. Produit de programme informatique qui, lors de son chargement et de son déroulement sur un ou plusieurs ordinateurs, induit un procédé selon l'une quelconque des revendications 1 à 17.
